# EUROPÄISCHE PATENTSCHRIFT

(11) **EP 2 906 386 B1**
(45) Veröffentlichungstag und Bekanntmachung des Hinweises auf die Patenterteilung: **09.12.2020**
(21) Anmeldenummer: 13773612.0
(22) Anmeldetag: 02.10.2013
(51) Int. Cl.: B23K 20/02, B23K 20/233

(54) **SCHICHTVERBUND**
LAYERED JOINED STRUCTURE
STRUCTURE DE COUCHES JOINTES

(30) Priorität: 15.10.2012 DE 102012109782
(43) Veröffentlichungstag der Anmeldung: 19.08.2015
(73) Patentinhaber: Karlsruher Institut für Technologie (KIT), 76131 Karlsruhe (DE)
(72) Erfinder: NORAJITRA, Prachai, 76689 Karlsdorf-Neuthard (DE); AKTAA, Jarir, 76185 Karlsruhe (DE); SPATAFORA, Luigi, 76689 Karlsdorf-Neuthard (DE); BASUKI, Widodo, 76133 Karlsruhe (DE)
(86) Internationale Anmeldenummer: PCT/EP2013/002964
(87) Internationale Veröffentlichungsnummer: WO 2014/060070

(56) Entgegenhaltungen:
- CN-A- 101 244 483
- US-A- 3 170 234
- US-A- 3 714 702
- US-A- 4 033 504
- US-A- 5 824 425

## Beschreibung

Die Erfindung betrifft ein Verfahren zur Herstellung von einem Schichtverbund aus von Metallen und/oder Metalllegierungen vorzugsweise umfassend Refraktärmetalle, besonders bevorzugt in Verbindung mit Wolfram und Vanadium bzw. Wolfram und Titan oder Tantal. Hierzu werden einzelnen Lagen der Metalle abwechselnd aufeinander geschichtet und gemäß des ersten Patentanspruchs mittels uniaxialem Diffusionsschweißen miteinander stoffschlüssig verbunden. Die Gattung zeigt die US3170234.

Schichtverbundwerkstoffe, auch als Laminate bezeichnet, sind Verbundwerkstoffe oder Kompositwerkstoffe deren Werkstoff aus zwei oder mehr verbundenen unterschiedlichen Materialien z. B. Metall-Metall-Kombinationen oder auch Metall-Keramik-Kombinationen oder auch Metall-Polymer-Kombinationen bestehen.

Ein Verbundwerkstoff besitzt andere Materialeigenschaften als seine einzelnen Komponenten durch Herstellung und Größe der Verbundwerkstoffkomponenten.

Als Refraktärmetalle werden im Zusammenhang mit dieser Erfindung hochschmelzenden, unedlen Metalle der **vierten** Nebengruppe, Titan, Zirconium und Hafnium, der **fünften** Nebengruppe, Vanadium, Niob und Tantal, und der **sechsten** Nebengruppe, Chrom, Molybdän und Wolfram, Ruthenium, Rhenium, Osmium, Iridium und einer Legierung aus den genannten Metallen bezeichnet.

Bedingt durch die kubisch raumzentrierte Gitterstruktur, zeigen fast alle Refraktärmetalle einen spröd-duktilen Übergang der Materialeigenschaften. Bei tiefen Temperaturen brechen sie spröde. Bei hohen Temperaturen sind Refraktärmetalle duktil.

Wird zum Beispiel Molybdän über eine bestimmte Temperatur erwärmt, verliert es seine Sprödigkeit und wird duktil. Diese zum Übergang von Sprödigkeit zu Duktilität notwendige Temperatur bezeichnet man als Spröd-Duktil-Übergangstemperatur.

Sie hängt unter anderem von der chemischen Zusammensetzung und dem Verformungsgrad des verwendeten Halbzeugs ab, d.h. dass die einzelnen Lagen bei gleicher chemischer Zusammensetzung unterschiedliches Verhalten zeigen wenn diese im Herstellungsprozess gewalzt oder gegossen wurden. Bei der mechanischen Bearbeitung von Refraktärmetallen ist die Kenntnis über die speziellen Eigenschaften dieser Materialgruppe unumgänglich. Die spanlose Formgebung wie Biegen oder Abkanten muss über der Spröd-Duktil-Übergangstemperatur erfolgen, damit das Blech zuverlässig rissfrei verformbar ist. Je dicker das Blech, desto höhere Temperaturen sind notwendig, um es rissfrei zu formen.

Spanabhebende Bearbeitung sowie auch Schneiden und Stanzen von Refraktärmetallen ist möglich, wenn die Bearbeitungstemperatur richtig eingestellt ist.

Das Schweißen von Refraktärmetallen untereinander mittels konventionellen Schweißverfahren (z. B. mittels WIG, Elektronenstrahl, Laser) erzeugt keinen ausreichenden stoffschlüssigen Verbund, auch wenn die Schweißung unter Schutzgas ausgeführt wird. Ursache ist die starke Grobkornbildung und damit einhergehende Versprödung der Schweißnaht. Das Gleiche trifft auch zu für das Verschweißen von Refraktärmetallen mit Stählen.

Das Löten von Molybdän an Stahl bietet ebenfalls nur eine von der Schmelztemperatur des eingesetzten Lot abhängige Einsatztemperatur und damit eingeschränkte Möglichkeit für stoffschlüssige Verbindungen. Darüber hinaus bildet das Diffusionsschweißen mit Zusatzstoff z. B. Kupfer eine spröde intermetallische Phase aus, welche bei einer nachträglichen plastischen Verformung Risse ausbildet.

Aus der Druckschrift DE 4030 389 C1 wird bereits ein Schichtverbund, hier ein Metallrohr mit zumindest einer Folie aus einem Refraktärmetall offenbart, wobei ein Rohrmantel des Metallrohres eine Mehrzahl von Lagen Folie aus Refraktärmetall aufweist und zumindest zwei Lagen Folie aus Refraktärmetall zumindest bereichsweise stoffschlüssig miteinander verbunden sind. Dabei werden jedoch durch die Metallfolien bzw. Metall-Lagen eine rohrförmige Wicklung gebildet und anschließend mindestens die zwei innersten oder die zwei äußersten Lagen der Wicklung explosiv miteinander verbunden werden. Dieses Verfahren der Herstellung ist nur für dünne Laminate anwendbar und stellt keine Lösung für Laminate mit 20 und mehr Lagen dar.

Aus der WO 2007/147792 A1 ist bereits ein Verfahren zur Herstellung von geformten Gegenständen aus Refraktärmetallen, insbesondere Bleche aus Wolfram oder Molybdän bekannt, wobei aus einer Wolframlegierung oder Molybdänlegierung in Pulverform einen Schlicker zum Foliengießen hergestellt wird und aus dem Schlicker eine Folie gegossen wird und die Folie nach dem Trocknen entbindert und gesintert wird um daraus ein Blech zu erhalten. Dieses Verfahren stellt aber keinen Schichtverbund in Sinner dieser Erfindung da.

Bisher verhindert das spröde Materialverhalten der Refraktärmetalle gerade bei tiefen Temperaturen, wie z. B. bei Wolfram, dessen Einsatz als Strukturwerkstoff.

Auch Laminate aus Wolfram-Vanadium sind bei Raumtemperatur spröde und deshalb erst bei oberhalb der Spröd-Duktil-Übergangstemperatur rissfrei umformbar.

Die Anforderungen an ein Strukturbauteil sind eine hohe Duktilität, eine hohe Risszähigkeit welche durch eine hohe Energieaufnahme im Kerbschlagbiegeversuch charakterisiert wird. Der Kerbschlagbiegeversuch ist genormt nach DIN EN ISO 148-1 und 14556:2006-10.

Es ist daher Aufgabe der Erfindung, ein Verfahren für eine stoffschlüssige Verbindung eines Schichtverbundes zwischen Refraktärmetallen und / oder Refraktärmetall-Legierungen zu finden um die Spröd-duktil-Übergangstemperatur zu niederen Temperaturen zu verschieben und gleichzeitig eine hohe Festigkeit, insbesondere bei hohen Temperaturen zu erhalten.

Die Aufgabe wird durch das Verfahren gemäß des ersten Anspruchs gelöst. Die Unteransprüche geben vorteilhafte Ausführungen des Verfahrens wider.

Gemäß Anspruch 1 wird die Aufgabe dahin gehend gelöst, dass bei einem Bauteil aus Refraktärmetall oder einer Refraktärmetall-Legierung der stoffschlüssige Übergang durch uniaxiales Diffusionsschweißen hergestellt wird. Lösungsgemäß weist der Schichtverbund zumindest zwei Lagen aus verschiedenen Metallen auf. Dabei sind zumindest zwei Lagen wenigsten teilweise stoffschlüssig mittels uni-axialem Diffusionsschweißen miteinander verbunden.

Der Schichtverbund ist vorzugsweise vollständig aus einzelnen Lagen aufgebaut sein, oder mit massiven Teilstücken eines anderen Materials, Metalls, insbesondere Wolfram, Vanadium, aber auch Stahl, Aluminium oder Kupfer und/oder ein weiteres Refraktärmetall und einer oder mehreren Metalllegierungen aufgebaut. Hierbei werden Metalle bevorzugt die miteinander kombiniert während des Diffusionsschweißens keine Intermetallische Phase, sondern einen Mischkristall bilden.

Im Besonderen besteht der Schichtverbund größtenteils aus Refraktärmetallen und/oder Refraktärmetall-Legierungen und / oder einer Mehrzahl von Lagen aus verschiedenen Teilstücken aus einem Refraktärmetall, insbesondere eine Mehrzahl von Lagen aus individuellen, d.h. getrennten Stücken aus einem Refraktärmetall. Vorzugsweise werden Lagen verschiedener Refraktärmetalle eingesetzt.

Insbesondere werden 2, 3,....20, usw. Lagen gleicher und/oder zumindest teilweise verschiedener Refraktärmetalle oder Refraktärmetall-Legierungen eingesetzt.

Um möglichst gute mechanische Eigenschaften der zu erreichen muss die Diffusionstemperatur unterhalb der niedrigsten
Rekristallisationstemperatur eines beteiligten Materials liegen, üblicherweise sind dies Temperaturen zwischen dem
0,4 und 0,9-fachen der niedrigsten Schmelztemperatur eines beteiligten Materialien.

Der Wärmeeintrag kann durch Induktion in den Schichtverbund eingebracht werden und auch über die Dauer des Diffusion sowie des Umformens in verschiedenen Stufen oder Phasen zyklisch variieren.

Der notwendige Druck wird beispielsweise über einen Stempel oder stempelfrei mittels einem Fluid, bevorzugt eines Inertgases wie z. B. Helium, Neon, Argon, Krypton, Xenon, Radon aber auch Kohlenstoffdioxid (CO₂), Stickstoff (N₂) oder Wasserstoff(H₂) auf den Schichtverbund aufgebracht.

In der Realität existieren ideal glatte und absolut saubere Oberflächen nicht. Alle Proben bzw. Halbzeuge, egal wie gut und präzise sie maschinell bearbeitet werden, zeigen immer wellige und raue Oberflächen mit einer großen Anzahl von Rauheitsspitzen. Beim Aneinanderlegen von zwei Kontaktflächen berühren sich die Rauheitsspitzen von beiden Seiten, so dass keine kontinuierliche Verbindung stattfindet, weil zwischen den Rauheitsspitzen Hohlräumen gebildet werden. Besonders Druck, Temperatur und Haltezeit, sowie die Oberflächenrauhigkeit der Kontaktflächen die z. B. eine elliptische Halblänge zwischen 7 bis 39 µm und eine Rauheitstiefe von 0,8 bis 3,5 µm aufweisen sind für den Diffusionsvorgang von extremer Bedeutung sind.

Im unbelasteten Zustand beträgt trotz der großen Anzahl der aneinander berührenden Rauheitsspitzen die totale Kontaktfläche je nach der Rauheit nur einen kleinen Bruchteil der gesamten zu verbindenden Fläche (Ag), z. B. zwischen 0,00001 Ag bis zu 0,01 Ag. Es ist offensichtlich, dass mit so wenig Kontaktfläche keine Verbindung hergestellt werden kann, die eine annährend so gute Festigkeit wie das Ausgangsmaterial besitzt. In diesem Fall wird eine solche Verbindung nicht als Schweißung sondern als Haftung bezeichnet. Für eine Diffusionsverbindung muss die Verbindung aber auf der gesamten Fläche gleichmäßig vorhanden sein, so dass eine kontinuierliche Verbindung zustande kommt.

Für die Herstellung einer guten Verbindung müssen die Atome von beiden zu verbindenden Kontaktflächen in den Abstand der atomaren Bindung (r0) gebracht werden. Die Abnahme und Zunahme des Atomabstands erhöht ihre potentielle Energie und damit verlässt das System das stabile Gleichgewicht. Damit der Abstand r0 erreicht wird, müssen beide Probenhälften unter Druck mit der Kraftrichtung senkrecht zur Verbindungsfläche zeitlich lang genug aufeinander gedrückt werden. Die zusammentreffenden Rauheitsspitzen werden lokal plastisch so stark deformiert, dass lokal ein atomarer Abstand erreicht wird und die interatomistischen Anziehungskräfte anfangen zu wirken. Dieses wird aber niemals gleichmäßig auf den gesamten Oberflächen für eine kontinuierliche Verbindung erreicht, ohne dass eine bemerkenswerte plastische Deformation des gesamten Probenkörpers in Erscheinung tritt.
Um diese zu vermeiden, muss die plastische Deformation mit Diffusionsvorgängen bei hoher Temperatur zusammenwirken.

Um eine materialschonende Verbindung zu gewährleisten, soll die Prozesstemperatur so gewählt werden, dass während des Diffusionprozesses keine große Veränderungen in den zu verbindenden Materialien (z. B. Rekristallisation, deren Temperatur von der Herstellungsgeschichte des Materials beeinflusst ist) stattfinden, welche negative Wirkungen auf die mechanische Eigenschaften des gesamten Schichtverbund (stark reduzierende Festigkeit und Duktilität) geben können. Diese Temperatur soll aber nicht zu niedrig sein. Die untere Temperaturgrenze liegt bei 0,4-facher Schmelztemperatur des Materials mit der niedrigsten Schmelztemperatur. Unterhalb dieser Grenze ist der Materialtransport durch Diffusionsvorgänge nicht mehr wesentlich. Bei einer Wolfram-Vanadium-Verbindung ist die untere Temperaturgrenze bei ca. 590 °C.

Der verwendete Druck in dem Diffusionsprozesses ist dabei niedriger oder maximal gleich der Fließspannung des Materials bei gegebener Temperatur, damit keine spontane plastische Deformation des gesamten Schichtverbunds auftritt. Außerdem soll die plastische Deformation aufgrund des Kriechens bei gegebener Diffusionsdauer mitberücksichtigt werden. Durch auf den Schichtverbund ausgeübten Druck, muss aber sichergestellt werden, dass die Oberflächen-rauheitsspitzen der einzelnen Lagen des Schichtverbunds lokal plastisch stark deformiert werden. Dies sorgt dafür, dass die zusammentreffenden Kontaktflächen vergrößert und die übriggebliebenen Resthohlräume so klein wie möglich werden, um die Diffusionsvorgänge in möglichst kurzer Zeit geschlossen zu werden.

Die Kontaktflächen sind normalerweise mit Fremdpartikeln verschmutzt bzw. von Ölschichten oder Oxidschichten und usw. bedeckt. Um optimale Diffusionsergebnisse müssen die Kontaktflächen zuerst gereinigt werden. Dies geschieht üblicherweise durch mechanische und chemische (Ätzen und Beizen) Abtragung der Oberfläche. Um die Bildung von Oberflächen-Oxid-Schichten zu vermeiden, wurden die Lagen unmittelbar nach dem Ätzen ins Aceton-Bad eingelegt.

Trotz dieser vorangehenden Reinigung, finden sich auf den Kontaktflächen kontinuierliche und spröde Oxidschichten, die einige Atomlagen dick sind. Durch die plastische Deformation des aufgebrachten Drucks werden diese Oxidschichten aufgebrochen und zerteilt. Die so von der Oxidschicht befreiten Kontaktflächen verbinden sich nun so besser miteinander und die zerstückelten Oxidschichten werden während Diffusionsprozesses im Schichtverbund aufgelöst. Hierbei besonders Vorteilhaft ist die Verwendung einer dynamischen Druckführung, während des Diffusionprozesses, um weitere lokale elastische sowie plastische Mikro-Verformungen zu erreichen. Die dynamischen Druckführung bei Wolfram-Vanadium-Verbindungsprozess liegt im Bereich zwischen 1 MPa und 500 MPa, besonders zwischen 10 MPa und 300 MPa. Die Dauer des Diffusionprozesses ist kein unabhängiger Parameter, weil sie sich letztendlich aus den anderen vorgegebenen Parametern ergibt. Bei gegebener Temperatur und gegebenem Druck sollte die Dauer für die physikalischen und wirtschaftlichen Überlegungen so kurz wie möglich gehalten werden. Die Dauer muss aber so lang gewählt sein, dass die zur Bildung eines Mischkristalls nötigen Diffusionsprozesses ablaufen können. Eine überlange Dauer des Diffusionsprozesses kann hingegen dazu führen das sich zwischen den einzelnen Lagen des Schichtverbundes einzelne spröde intermetallische Phasen ausbilden. Im Falle des Wolfram-Vanadium beträgt die Dauer des Diffusionsvorganges und des damit verbunden Ausbildung einen Mischkristalls zwischen einigen Minuten und einigen Stunden.

Zum Schneiden der einzelnen Lagen des Schichtverbundes wird vorzugsweise ein Laserschneidverfahren gewählt, da sich dadurch keine zusätzlichen plastischen Verformungen und keine Grate an den Schnittkantenergeben. Ferner ist der Wärmeeinflußbereich des Laserschneidverfahren sehr gering womit auch sehr kleine Flächen einer Lage hergestellt werden können.

In Versuchen wurde bereits festgestellt das, mittels dem uniaxialen Diffusionsschweißen ohne Zusatzstoffe (wie z. B. Weichlote S-Sn97Cu3, S-Sn97Ag3 oder Hartlote CP 203 (L-CuP6), CP 105 (L-Ag2)) eine überraschender Weise eine hochfeste Bindung zwischen Wolfram und Vanadium, erzeugt werden kann und der Schichtverbund eine niedrigerer Spröd-duktil-Übergangstemperatur besitzt.

Die Erfindung wurde bereits im Labormaßstab erfolgreich erprobt. Dabei wurden die Wolfram-und Vanadiumlagen mittels Laserschneiden zwischen 50 und 200 µm geschnitten, gereinigt z. B. mit Königswasser und / oder einer Lösung aus Ammoniak und Natriumnitrat wobei die *Lösung* ein molares Verhältnis von 1:1 bis 1:1,5 aufweist,
und anschließend mit Aceton behandelt, abwechselnd aufeinander geschichtet und im Vakuumofen mit einer dafür nicht weiter ausgeführten Vorrichtung bei einer Temperatur von 590 - 780 °C, vorzugsweise 650 - 750 °C, weiter bevorzugt 680 - 720 °C unter einem Druck von 50 - 300 MPa, bevorzugt von 80 - 180 MPa und einer zyklisch wiederholenden Erhöhung des Drucks von bis zu 300 % und einer Haltezeit von zwei bis zwanzig Stunden, bevorzugt von drei bis zehn Stunden, gehalten. Die Dauer eines Zyklus mit erhöhten Druck ist im Verhältnis zur Gesamtdauer des Diffusionprozesses bei ca. 1/20 bis 1/30.

Es konnte sehr deutlich gezeigt werden, dass die Diffusionparameter und die Probenvorbereitung einen besonders großen Einfluss auf die Qualität und Dauerfestigkeit Verbindung ausüben.

Besonders vorteilhaft hat sich erwiesen, wenn die Spannungen, die während des Diffusionsprozesses senkrecht zu den Oberflächen der einzelnen Lagen wirken, in ihrem Maximalwert variieren und bis an die Streckgrenze reichen können. Lokal können hierbei auch Spannungen über der Streckgrenze erreicht werden.

Der Schichtverbund wurde mittels metallografischer Methoden untersucht. Die Festigkeit der Verbindung wurde mittels Untersuchungen der Kerbschlagfestigkeit charakterisiert. Aufgrund der Ergebnisse dieser Untersuchungen wurden Diffusionparameter identifiziert die eine sehr gute Haltbarkeit und Qualität des Schichtverbunds nachweisen.

Bevorzugte Parameter für das Diffusionsschweißen von Refraktärmetallen, insbesondere Wolfram und Vanadium, wurden empirisch ermittelt. Sie liegen im Rahmen eines Ausführungsbeispiels bei einer Temperatur von 700 °C und einer Druckspannung von 100 MPa bei einer Haltezeit von ca. 4 h.

Auch Gegenstand der Erfindung ist es ein Fertigungsverfahren bereitzustellen um Strukturbauteile aus dem bereits beschriebenen Schichtverbundwerkstoff während der Abkühlphase und/oder noch während der Diffusionsphase in eine Endkonturnahe Geometrie umzuformen.

Um eine endkonturnahe Verformung des Schichtstapels zur erreichen und die Duktilität der beteiligten Materialen voll nutzen zu können muss der Umformungsprozess bei zwischen des 0,4 bis 0,8-fachen der Schmelztemperatur stattfinden.

Mit dem erfindungsgemäßen Verfahren können sich strukturierte Werkstücke aus Refraktärmetallen oder -Iegierungen fertigen lassen sich z. B. als heliumgekühlter Wärmetauscher für einen Divertor in einem Fusionsreaktor oder zur effektiven Wärmeabfuhr und Kühlung von elektronischen Bauteilen verwenden.

Mit diesem Verfahren hergestellte auch mikrostrukturierte Bauteilen aus Refraktärmetallen oder -Iegierungen, insbesondere aus Wolfram oder W-ODS (Oxide Dispersion Strengthed Wolfram) sind als Teile für den Bau eines Gaswärmetauschers mit einer Wärmeleitfähigkeiten von ca. 100 W/mK vorgesehen.

Wolfram weist gegenüber Aluminium oder Kupfer eine höhere Beständigkeit insbesondere gegenüber Temperaturbelastungen auf.

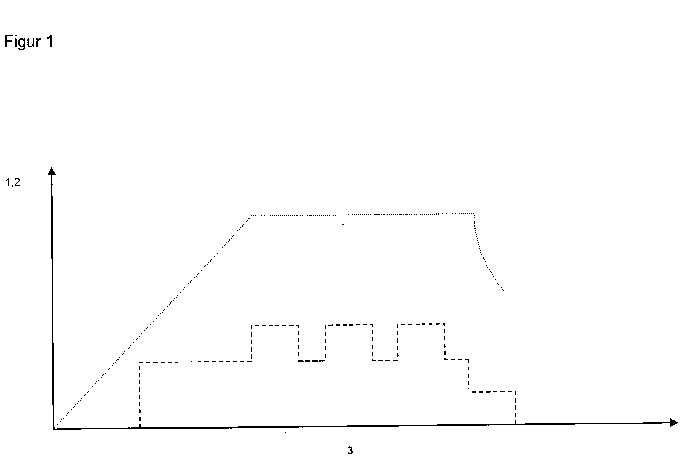

Fig.1 zeigt den zeitlichen Verlauf einer bevorzugten Verfahrensführung mit einem variablen Druck bei konstanter Temperatur

### Bezugszeichenliste

- 1: T [°C]
- 2: Druck/Spannung [MPa]
- 3: Prozessdauer [min]

## Patentansprüche

1. Verfahren zur Herstellung von einem Schichtverbund, umfassend die folgenden Verfahrensschritte:
a) Bereitstellung mindestens einer Lage aus einem Refraktärmetall sowie mindestens einer Lage aus einem anderen Metall und/oder einer Metalllegierung, das bzw. die mit einem Refraktärmetall einen Mischkristall ausbildet,
b) abwechselndes Aneinanderlegen je einer Lage aus einem Refraktärmetall sowie je einer Lage aus einem anderen Metall und/oder einer Metalllegierung, das bzw. die mit einem Refraktärmetall einen Mischkristall ausbildet, zu einem Schichtstapel unter Bildung von zusammentreffenden Kontaktflächen,
c) Diffusionsschweißen der Lagen im Schichtstapel unter Ausschluss einer oxidierenden Atmosphäre bei einer Temperatur zwischen dem 0,4 und 0,9-fachen der Schmelztemperatur des Metalls sowie einem Druck mit einem orthogonal zu den Kontaktflächen orientierten Druckrichtungsanteilen, und **dadurch gekennzeichnet, dass**
d) sich der Druck während des Diffusionsschweißens in seiner Höhe in einer dynamischen Druckführung ändert.

2. Verfahren nach Anspruch 1,
**dadurch gekennzeichnet, dass**
der Druck über ein Fluid eingebracht wird.

3. Verfahren nach Anspruch 1 oder 2,
**dadurch gekennzeichnet, dass**
die Temperatur über Induktion und/oder Konduktion in den Schichtstapel eingebracht wird.

4. Verfahren nach einem der Ansprüche 1, 2 oder 3,
**dadurch gekennzeichnet, dass**
der Druck zyklisch ändernde orthogonal
und/oder parallel zu den Kontaktflächen orientierten Druckrichtungsanteile aufweist.

5. Verfahren nach einem der Ansprüche 1 bis 4,
**dadurch gekennzeichnet, dass**
der Druck zyklisch schwankt.

6. Verfahren nach einem der Ansprüche 1 bis 5,
**dadurch gekennzeichnet, dass**
der Druck eine lokale Mikrospannung oberhalb der Streckgrenze im Schichtverbund eines beteiligten Materials hervorruft.

7. Verfahren nach einem der vorgenannten Ansprüche,
**dadurch gekennzeichnet, dass**
der Schichtverbund während der Diffusionsphase und/oder der Abkühlphase plastisch verformt wird.

## Claims

1. Method for producing a layer composite,
comprising the following method steps:
a) providing at least one layer made of a refractory metal, as well as at least one layer of another metal and/or a metal alloy, which with a refractory metal form a mixed crystal,
b) laying the layers in an alternating manner, in each case with one layer of a refractory metal and one layer of another metal and/or a metal alloy, which with a refractory metal form a mixed crystal, to form a layer stack with contiguous contact surfaces,
c) diffusion welding of the layers in the layer stack in the absence of an oxidizing atmosphere at a temperature between 0.4 and 0.9 times the melting temperature of the metal and at a pressure with a directional component oriented orthogonally to the contact surfaces,
and **characterised in that**
d) during the diffusion welding the pressure changes its level in a dynamic pressure guidance process.

2. Method according to claim 1,
**characterised in that**
the pressure is applied by means of a fluid.

3. Method according to claim 1 or 2,
**characterised in that**
the temperature is introduced into the layer stack by induction and/or conduction.

4. Method according to any one of claims 1, 2, or 3
**characterised in that**
the pressure exhibits cyclically changing pressure directional components, oriented orthogonally and/or parallel to the contact surfaces.

5. Method according to any one of claims 1 to 4,
**characterised in that**
the pressure fluctuates cyclically.

6. Method according to any one of claims 1 to 5,
**characterised in that**
the pressure incurs a local micro-tension above the yield point in the layer composite of a participant material.

7. Method according to any one of the preceding claims,
**characterised in that**
the layer composite undergoes plastic deformation during the diffusion phase and/or the cooling phase.

## Revendications

1. Procédé pour réaliser une combinaison de couches comprenant les étapes suivantes consistant à :
a) utiliser au moins une couche d'un métal réfractaire ainsi qu'au moins une couche en un autre métal et/ou un alliage métallique qui développent une solution solide avec le métal réfractaire,
b) juxtaposer en alternance chaque fois une couche d'un métal réfractaire et d'une couche d'un autre métal et/ou d'un alliage métallique formant avec le métal réfractaire une solution solide pour réaliser un empilage de couches en formant des surfaces de contact réunies,
c) souder par diffusion la couche dans l'empile de couches avec exclusion d'une atmosphère oxydante, à une température comprise entre 0,4 et 0,9 fois la température de fusion du métal sous une pression ayant des composants directionnels de pression orthogonales aux surfaces de contact, et
**caractérisé en ce que**
d) on modifie l'amplitude de la pression pendant le soudage par diffusion par une conduite dynamique de la pression.

2. Procédé selon la revendication 1,
**caractérisé en ce que**
on applique la pression par l'intermédiaire d'un fluide.

3. Procédé selon la revendication 1 ou 2,
**caractérisé en ce que**
on applique la température par induction et/ou par conduction dans la pile de couches.

4. Procédé selon l'une des revendications 1, 2 ou 3,
**caractérisé en ce que**
la pression a des composants directionnels de pression variant cycliquement, orientés orthogonaux et/ou parallèles aux surfaces de contact.

5. Procédé selon l'une des revendications 1 à 4,
**caractérisé en ce que**
la pression varie de manière cyclique.

6. Procédé selon l'une des revendications 1 à 5,
**caractérisé en ce que**
la pression produit une micro-tension locale au-dessus de la limite d'allongement dans la combinaison de couches d'une matière concernée.

7. Procédé selon l'une des revendications précédentes,
**caractérisé en ce que**
la combinaison de couches se déforme plastiquement pendant la phase de diffusion et/ou la phase de refroidissement.
